# EUROPEAN PATENT APPLICATION

(11) **EP 2 335 487 A1**
(43) Date of publication of application: **22.06.2011**
(21) Application number: 10380153.6
(22) Date of filing: 15.12.2010
(51) Int. Cl.: A23B 7/00, A23B 7/005, A23L 1/212, A23L 3/015, A23L 3/10

(54) **Method for preserving capsicum annuum L. pepper**

(30) Priority: 21.12.2009 ES 200902369
(71) Applicant: Olus Technologia, SL, 31185 Zizur Mayor Navarra (ES)
(72) Inventor: Ramos Lopez, Segio José, 31185 Zizur Mayor (Navarra) (ES); Garcia de la Torre, Silvia, 31185 Zizur Mayor (Navarra) (ES); Gonzalez Navarro, Carlos Javier, 31185 Zizur Mayor (Navarra) (ES)
(74) Representative: Torner Lasalle, Elisabet

(57) **Abstract**

The invention relates to a method for preserving *Capsicum annuum L.* pepper, comprising the phases of: roasting, peeling and packing the peppers in conditions of subjecting to an atmospheric pressure of between 200 to 700 MPa, an adiabatic heating occurs for 30 and 900 seconds, to return to atmospheric pressure and storing the pepper at a temperature of between 3°C and 7°C, the method being able to be performed: using vacuum-packing and a flexible packing; in a protected atmosphere in a flexible container; and adding preserving liquid at a proportion of 10% of the content of the container.

## Description

### Technical field

The present invention relates to the preservation of food products previously processed for consumption based on pepper of the *Capsicum annuum L.* species, particularly of the variety known as piquillo pepper. The year-round availability of roasted peppers with organoleptic and nutritional properties similar to those of a recently roasted in-season fresh product is assured by means of the present invention. This method being the least aggressive cooking method with the product to the effect

### State of the Art

The pepper of the *Capsicum annuum L.* species is a widespread product all over the world and it is especially valued for its gastronomical properties. There are many varieties of this species that are grown worldwide.

Each variety, depending on its particular biological characteristics and the geographic and climatic conditions of the region of the world where it is grown, has its specific growing and harvesting period during the year, which makes the production of this agricultural product highly seasonal. For example, in the case of the piquillo variety, which holds international recognition and is registered in the European Register of Protected Designations of Origin of Agricultural Products with the Designation of Piquillo de Lodosa because of its quality, has a harvesting period ranging from mid-September until November. This means that these products, especially the top-quality varieties, can only be consumed fresh for a brief period of the year and that during the remainder of the year they are consumed as preserved, dried or as ground pepper.

The preservation of products of this type is done by means of common preservation techniques which comprise washing away the impurities and cooking the pepper, usually by means of subjecting it to mild roasting in order to maintain its flavor, color, texture and aroma intact as much as possible; the final cleaning and introducing the pepper, which can be whole or cut, into preserving containers together with a determined percentage of preserving liquid with preserving properties, the sealing of the container and the sterilization thereof by heating means, for example by means of autoclave. This processing produces preserved peppers year-round at room temperature but in exchange, the organoleptic and nutritional properties of this product are drastically modified with respect to consuming it when it has been recently cooked without being subjected to the preservation treatment, and preserving substances are further added which alter the characteristics of the original product all the more and introduce unnatural substances into the product. Concerning the modification of the nutritional properties, the significant loss of vitamin C in the preserved product compared to the high content of this vitamin in the recently cooked product is particularly noteworthy.

As an alternative to this method of preservation, non-heat technologies have been developed in recent years which pasteurize the processed product even though they do not actually sterilize the product. One of them is high-pressure processing. Some examples of processes which contemplate this type of treatment can be found in the following patents.

ES2162583 describes a process for preserving fruit salads considerably more than what has been achieved by conventional means by combining a sugar solution with ascorbic acid as a natural antioxidant natural and with a high-pressure processing treatment. By subsequently maintaining this product at 5°C or less, a lifetime of approximately 8 weeks is obtained. In the case of Capsicum annuum, this solution is not viable for the objective that is sought because the addition of the sugar solution would drastically modify the organoleptic properties of the target product.

EP1316259 proposes the preservation of cut or thinly sliced potatoes that are fried and processed using high pressures. The results described in the document show that the potatoes thus treated can reach a lifetime of 6 months in refrigerated conditions. This result is shown as an important precedent to take into account because it is similar to the objective proposed in the present invention. The main difference is based on the fact that the potato had to be fried in order to reach the lifetime levels and this type of cooking is highly aggressive for peppers since they come into contact with oil, thus modifying their organoleptic and nutritional properties with respect to the recently roasted fresh product.

EP1570742 describes a process for preserving prepared vegetable-based dishes by means of a high pressure steam treatment. In this invention, even though high-pressure processing is performed in the final stage, it is performed prior to a sanitizing step by means of pressure which, in the case of Capsicum annuum, would be too aggressive for the objective that is sought.

WO2006056341 claims a method for preserving vegetables at room temperature which have been subjected to high-pressure processing, packed together with a preserving edible oil. Despite the fact that preservation at room temperature is a highly desired characteristic, the need to incorporate a preserving oil into the product would change, as in all the previous cases, the organoleptic and nutritional properties of the pepper, the sought effect thus not being achieved.

### General Description of the Invention

The fruit of Capsicum annuum, known with different names worldwide by the special designation of its variants such as pepper, chili, piquillo, ají... is a food product with a high gastronomical value due to its special flavor, texture and aroma, making it a highly valued ingredient in most gastronomical cultures of the world, and also due to its high nutritional value because it is a vegetable with little caloric value but with a considerable amount of carbohydrates, fibers, vitamin C, being able to contain more of the latter than citric fruits, folates and minerals, such as phosphorus and magnesium.

The most basic preparation for its consumption is one in which the pepper has minimal contact with other substances in order to maintain its organoleptic properties intact as much as possible, while at the same time the product is no longer raw or fresh. Slight roasting is the form which has shown to be the least aggressive, and which at the same time best retains the organoleptic properties thereof for its direct consumption or for its use as an ingredient in other dishes, thus optimally providing them with its gastronomical value.

The pepper varieties with a special value within the family, such as the piquillo pepper for example, do not produce fruit year-round, so in order to be able to use this product when it is out of season it is necessary to subject it to heat and chemical preservation treatments which alter the gastronomical properties and especially the nutritional properties, which are considerably depleted.

The present invention relates to the manner of retaining the organoleptic and nutritional properties of this product for long time periods while at the same time assuring food safety for products of this type so that they are suitable for consumption, i.e., free of harmful pathogens. The process which is described below has been conceived and developed to that end.

After carefully harvesting the fruit, it is roasted in a burner between 60 and 600 seconds. This time will mainly be determined by the heating power of the flame. After performing this operation, and without the product coming into contact with water or other cleaning substances, the roasted fruit is peeled and cored in maximum hygiene conditions. One or several peppers are then packed in a container made of a sealable and flexible material, with complete barrier properties in both its natural and compressed states, and the container is vacuum-sealed. The peppers can preferably be packed as dried peppers or packed with an edible preserving liquid, the proportion of which must be less than 10%.

The packed pepper is subjected to an isostatic pressure profile in pressure equilibrium and for a processing time that is sufficient to inactivate the pathogens and that is under the time which alters the organoleptic properties of the product due to the effect of enzyme activation which the treatment presents as a negative side effect in some cases and which modifies the organoleptic and nutritional properties of the products because of this enzyme action. The pressure profile and processing time suited for each case will be determined by the initial bacterial load of the product and the lifetime which is sought. The outer limits of the pressure profile and of the processing time of the region in which the processing is effective are the following. Subjecting the product to pressures of less than 200 MPa has no effect which prolongs the lifetime of the product, whereby the desired preservation effect is not obtained, and pressures greater than 700 MPa have effects which modify the organoleptic properties of the pepper which that even though the pepper is preserved, its nature is modified. Times of less than 30 seconds of treatment do not produce a preservation effect, not even in the highest range of pressures and there are no improvements of the lifetime at any of the pressures in times greater than 900 seconds.

After this operation, the packed product is stored in refrigerated conditions with the proviso that the cold chain not be broken during the preservation step until consumption. The storage temperature must be one that is commonly accepted in the commercial cold chain, the standard temperatures of which range between 3°C and 7°C, the lifetime of the product being drastically reduced for higher temperatures and having possible congealing effects at lower temperatures.

### Detailed Description of Particular Embodiments

A particular embodiment of the invention is based on *Capsicum annuum L.* peppers of the Piquillo de Lodosa variety, and within the latter, Extra and Primera commercial pepper categories. After harvesting and in the briefest time period possible, the peppers are conditioned and roasted in a burner for 1 minute. After roasting and without having immersed the fruit in water at any time or having washed them with water or chemical solutions, they are manually cored, peeled and de-seeded, operations which will be very carefully performed.

The roasted, cored and peeled peppers are then vacuum-packed in a flexible container with complete barrier properties. The packed peppers are subjected, at room temperature, to an isostatic pressure profile which, starting at atmospheric pressure, reaches up to 500 MPa, adiabatic heating occurring, is maintained for 7 minutes at 500 MPa and finally drops down to atmospheric pressure again.

After subjecting the peppers to the isostatic pressure profile, they are stored in refrigerated conditions at 4°C until consumption. The results obtained in the product thus processed are described below in comparison to the conventional sterilized product after 285 days of storage, i.e., approximately 9 months after processing.

From the food safety point of view, in samples artificially inoculated with *E. coli* and *L. monocytogenes* in order to measure the sanitizing effect of the product, there is an absence of *E. coli* and *L. monocytogenes* just as in the sterilized product. Concerning the presence of aerobic mesophilic bacteria, regulated by law, a presence of less than 10 cfu/g is found. In other words, from the food safety point of view, the product provides results that are comparable to those of the traditional preserved product.

From the nutritional point of view, the results obtained from nutritionally comparing the product processed by the method described in the present invention and the method of the traditional preserved product are shown in the following table:

| | HPP pepper | Sterilized pepper | UNITS |
|---|---|---|---|
| Energy value | 69.13 ± 3.75 | 25.95 ± 11.37 | Kcal / 100g |
| Moisture | 83.01 ± 0.76 | 90.86 ± 0.04 | g /100 g pepper |
| Protein | 2.32 ± 0.19 | 0.67 ± 0.61 | g /100 g pepper |
| Fat | 0.22 ± 0.04 | 0.19 ± 0.00 | g /100 g pepper |
| Carbohydrates | 14.47 ± 1.07 | 5.72 ± 0.48 | g /100 g pepper |
| Insoluble fiber | 2.17 ± 0.04 | 0.82 ± 0.03 | g /100 g pepper |
| Ash | 1.05 ± 0.04 | 2.79 ± 0.10 | g /100 g pepper |
| Sodium | 0.29 ± 0.01 | 4.45 ± 0.41 | mg/ 100 g pepper |
| C (ascorbic acid) | 211.61 ± 16.59 | 31.45 ± 0.84 | mg/ 100 g pepper |
| E (a tocopherol) | 2.01 ± 0.07 | 2.11 ±0.19 | mg/ 100 pepper |
| Total phenols | 1.70 ± 0.05 | 0.55 ± 0.06 | mg EAG/g |
| DPPH | 903.59 ± 66.81 | 43.09 ± 1.17 | µg Trolox/g |
| ABTS | 1,372.98 ± 161.89 | 688.16 ± 16.47 | µg Trolox/g |

The main aspect which stand out in this comparison are: the vitamin C content of the sterilized peppers is significantly lower than that in those treated with high pressures; sodium is twice as high for sterilized peppers because they contain added salt; the sterilized peppers have a lower protein content; the antioxidant activity is significantly greater in the product treated by high pressures. In summary, a product is obtained which, unlike the product processed with the current technologies, significantly allows:
- Retaining a higher vitamin C content.
- Reducing the amount of salt in the product.
- Retaining a higher protein content.
- Retaining greater antioxidant activity.

## Claims

1. A method for preserving *Capsicum annuum L.* pepper, comprising a first phases of roasting the peppers in a burner by means of the action of the direct flame for a period of between 6 and 600 seconds; a second phase in dry conditions of peeling, coring and de-seeding; and a third phase of packaging the product in a container with a complete barrier, **characterized in that** said phase of packaging comprises subjecting the peppers to room temperature, to an isostatic pressure profile, which goes from atmospheric pressure up to between 200 and 700 MPa, an adiabatic heating occurring, and maintaining the pressure for 30 to 900 seconds, to then again pass to atmospheric pressure; and finally storing the product until consumption at a temperature between 3°C and 7°C.

2. The method for preserving *Capsicum annuum L.* pepper of claim 1, **characterized in that** the packing is performed under vacuum and in a flexible container.

3. The method for preserving *Capsicum annuum L.* pepper of claim 1 or 2, **characterized in that** the packing is performed in a protective atmosphere and in a flexible container.

4. The method for preserving *Capsicum annuum L.* pepper of claim 1, 2 or 3, **characterized in that** preserving liquid is added during packing at a proportion less than 10% of the net content of the container.
